# EUROPEAN PATENT APPLICATION

(11) **EP 1 927 919 A1**
(43) Date of publication of application: **04.06.2008**
(21) Application number: 06291863.6
(22) Date of filing: 30.11.2006
(51) Int. Cl.: G06F 9/445, H04L 12/24, G06F 9/44

(54) **Management method for server customer communication**

(71) Applicant: Alcatel Lucent, 75008 Paris (FR)
(72) Inventor: Bouchat, Christele, 2060 Antwerp (BE); Stevens, Christoph, 9190 Stekene (BE); Justen, Pascal Marie Edouard Julien, 1150 Sint-Pieters-Woluwe (BE); Liekens, Werner Mario, 2860 Sint Katelijne Wayer (BE); Coppens, Jan, 9000 Gent (BE); Acke, Willem Jozef Amaat, 2820 Rijmenam (BE)
(74) Representative: Moens, Marnix Karel Christiane

(57) **Abstract**

Methods for managing communications between server devices (30) and customer devices (11,12,13) comprise steps of reading / writing parameters at one of the devices (11,12,13,30) for configuring / monitoring the other one of the devices (11,12,13,30) and, to allow arbitrary parameters to be introduced, comprise steps of, for the parameters, creating attributes comprising extended markup language schemes for defining the parameters. Said one of the devices (30) is linked to a northbound interface (33) and a southbound interface (31,32), the creating step being performed via the southbound interface (31,32). Said one of the devices (30) is linked via the northbound interface (33) to for example a service provider (40) and via the southbound interface (31,32) to for example the customer device (11,12,13). The extended markup language schemes may define types, descriptions of the types, descriptions and/or metadata of the for example non-standardized parameters with names and values. The server device (30) may be an auto configuration server, the customer device (11,12,13) may be a customer premises equipment, the method may be a TR069 protocol.

## Description

The invention relates to a method for managing a communication between a server device and a customer device, which method comprises the step of
- at one of the devices, reading and/or writing a parameter for configuring and/or monitoring the other one of the devices.

Examples of such a method are protocols, an example of such a server device is an auto configuration server, and an example of such a customer device is a customer premises equipment.

US 2006/0120305 A1 discloses a remote management method and an auto configuration server. US 2006/0075118 A1 discloses a system for exchanging messages between customer devices and servers.

A prior art method is of common general knowledge. A management protocol for example manages a communication between a customer device (CPE) and a server device (auto configuration server or ACS). The management protocol defines a mechanism that for example encompasses secure auto configuration of a CPE, and may further incorporate other CPE management functions into a common framework. The management protocol can make use of RPC methods which define a generic mechanism by which an ACS can read or write parameters to configure a CPE and monitor a CPE status and its statistics. Each parameter for example consists of a name-value pair. The name identifies the particular parameter, and has a hierarchical structure similar to files in a directory, with each level separated by a "." (dot). The value of a parameter may be one of several defined data types. Parameters may be defined as read-only or read-write.

A problem exists in that there may be no description of the type of the parameter, except if the parameter is standardized, then the type is described, but may not be available from the object model itself. This means that there is no way a new non-standardized object model can be discovered and dynamically uploaded from the customer side to the server side. When going for service management via the management protocol, this is a problem in the business model of multi service provider management. Each service provider can and will create own services and applications. Such application-related parameters won't be standardized as it is today the case for device-dependent parameters. A discovery of services offered by bundles of other service providers should not destroy the value of a service platform that offers the services of bundles to other bundles. For example in case a first service provider has created a bundle, which offer its services to the service platform, and a second service provider enters the service platform, then in order to allow the bundles of the second service provider to make use of the bundles of the first service provider, the second service provider must be able to see and understand, and to keep track of the change of the bundles of the first service provider, even in case the second service provider is not allowed to manage the bundles of the first service provider.

It is an object of the invention, to provide a method as defined above that allows an arbitrary parameter to be introduced.

The method according to the invention is characterized in that the method comprises the step of
- for the parameter, creating an attribute comprising an extended markup language scheme for defining the parameter.

By creating an attribute comprising an extended markup language scheme for defining the parameter, an arbitrary parameter can be introduced, and said one of the devices can read and/or write even a completely new parameter for configuring and/or monitoring the other one of the devices.

The method according to the invention is further advantageous, inter alia, in that it is more flexible and offers more possibilities.

An embodiment of the method according to the invention is characterized in that said one of the devices is linked to a northbound interface and a southbound interface, the creating step being performed via the southbound interface. Said one of the devices is linked via the northbound interface to for example a service provider and via the southbound interface to for example the customer device.

An embodiment of the method according to the invention is characterized in that the extended markup language scheme defines a type of the parameter and/or a description of the type of the parameter and/or a description of the parameter and/or metadata of the parameter. This embodiment discloses several ways of how to define the parameter.

An embodiment of the method according to the invention is characterized in that the parameter is a non-standardized parameter comprising a name and a value. Especially non-standardized parameters could not be used in a prior art situation and can now be used advantageously in a situation according to the invention.

An embodiment of the method according to the invention is characterized in that the server device is an auto configuration server and the customer device is a customer premises equipment and the method is a TR069 protocol.

An embodiment of the method according to the invention is characterized in that the method further comprises the step of
- exporting a graphical user interface and/or a web interface over a remote management protocol from a home device to a home service management platform or a further device. The home device may correspond with the customer device, or not, and the home service management platform may correspond with the server device, or not. The home service management platform may for example aggregate several or all graphical user interfaces of several or all home devices. Therefore, this embodiment may be dependent on or independent from the reading and/or writing step and the creating step.

An embodiment of the method according to the invention is characterized in that the method further comprises the step of
- including metadata for a further parameter to an object model that lists parameters for configuring the home device, which metadata defines a meaning and/or a way it is to be depicted in the graphical user interface and/or the web interface.

The invention also relates to a computer program product for performing the steps of the method as defined above.

The invention also relates to a medium for storing and comprising the computer program product as defined above.

The invention also relates to an apparatus for managing a communication between a server device and a customer device, which apparatus is one of the devices and comprises
- means for reading and/or writing a parameter for configuring and/or monitoring the other one of the devices,
which apparatus is characterized in that the apparatus comprises
- means for, for the parameter, reading and/or writing an attribute comprising an extended markup language scheme for defining the parameter.

An embodiment of the apparatus according to the invention is characterized in that said apparatus is linked to a northbound interface and a southbound interface, the attribute reading and/or writing means being linked to the southbound interface.

An embodiment of the apparatus according to the invention is characterized in that the extended markup language scheme defines a type of the parameter and/or a description of the type of the parameter and/or a description of the parameter and/or metadata of the parameter.

An embodiment of the apparatus according to the invention is characterized in that the parameter is a non-standardized parameter comprising a name and a value.

An embodiment of the apparatus according to the invention is characterized in that the server device is an auto configuration server and the customer device is a customer premises equipment and the managing of the communication is in accordance with a TR069 protocol.

Preferably, the apparatus according to the invention further comprises
- means for exporting a graphical user interface and/or a web interface over a remote management protocol from a home device to a home service management platform or a further device. The home device may correspond with the customer device, or not, and the home service management platform may correspond with the server device, or not. The home service management platform may for example aggregate several or all graphical user interfaces of several or all home devices. Therefore, this embodiment may be dependent on or independent from the means for reading and/or writing the parameter and the means for reading and/or writing the attribute.

Further preferably, the apparatus according to the invention further comprises
- means for including metadata for a further parameter to an object model that lists parameters for configuring the home device, which metadata defines a meaning and/or a way it is to be depicted in the graphical user interface and/or the web interface.

Embodiments of the computer program product according to the invention and of the medium according to the invention and of the apparatus according to the invention correspond with the embodiments of the method according to the invention.

The invention is based upon an insight, inter alia, that it should be possible to introduce a new parameter without needing to standardize it, and is based upon a basic idea, inter alia, that an attribute comprising an extended markup language scheme for defining the parameter is to be introduced and/or used.

The invention solves a problem, inter alia, to provide a method as defined in the preamble that allows an arbitrary parameter to be introduced. The method according to the invention is further advantageous, inter alia, in that it is more flexible and offers more possibilities.

These and other aspects of the invention will be apparent from and elucidated with reference to the embodiments(s) described hereinafter.
Fig. 1 shows diagrammatically a system comprising a transport network coupled to a server device according to the invention and to a home network with a customer device according to the invention and to a service provider,
Fig. 2 shows diagrammatically a service termination, a gateway and a server device in greater detail, and
Fig. 3 shows diagrammatically a system comprising a home network and an internet network coupled to each other.

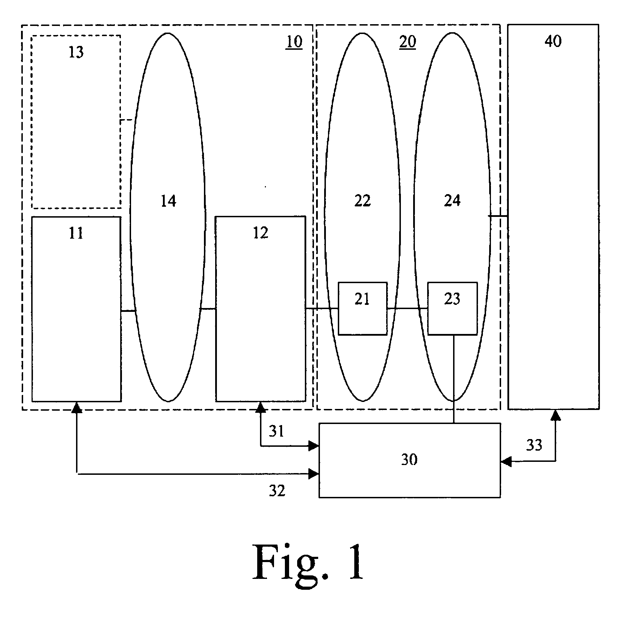

The system shown in the Fig. 1 comprises a transport network 20 comprising an access network 22 with an access node 21 and comprising a core network 24 with an edge node 23 coupled to a server device 30 according to the invention. The core network 24 is coupled to a service provider 40 or a service configuration manager 40. The access node 21 is coupled to the edge node 23 and to a gateway 12 of a home network 10. The home network 10 further comprises a service termination 11 and a manager 13 coupled to each other and to the gateway 12 via a local network 14. The service termination 11 and the gateway 12 and the manager 13 are customer devices 11, 12 and 13. The server device 30 is linked via southbound interfaces 31 and 32 to the gateway 12 and the service termination 11 and is linked via a northbound interface 33 to the service provider 40 or the service configuration manager 40. The interfaces 31, 32 and 33 are remote management interfaces. Local management interfaces such as UPnP discovery and (auto)configuration all not shown may be present between the manager 13 on the one hand and the service termination 11 and the gateway 12 on the other hand.

In a prior art situation, a management protocol such as TR069 manages a communication between a customer device 11, 12, 13 such as a customer premises equipment and a server device 30 such as an auto configuration server. The management protocol defines a mechanism that for example encompasses secure auto configuration of the customer device 11, 12, 13, and may further incorporate other customer device management functions into a common framework. The management protocol can make use of RPC methods which define a generic mechanism by which the server device 30 can read or write parameters to configure the customer device 11, 12, 13 and monitor a customer device status and its statistics. Each parameter for example consists of a name-value pair. The name identifies the particular parameter, and has a hierarchical structure similar to files in a directory, with each level separated by a "." (dot). The value of a parameter may be one of several defined data types. Parameters may be defined as read-only or read-write.

A problem exists in that there may be no description of the type of the parameter, except if the parameter is standardized, then the type is described, but may not be available from the object model itself. This means that there is no way a new non-standardized object model can be discovered and dynamically uploaded into the server device 30 via the southbound interface 31, 32. When going for service management via the management protocol, this is a problem in the business model of multi service provider management. Each service provider can and will create own services and applications. Such application-related parameters won't be standardized. A discovery of services offered by bundles of other service providers should not destroy the value of a service platform that offers the services of bundles to other bundles.

According to the invention, to be able to allow an arbitrary parameter to be introduced, a method comprises the steps of
- at one of the devices 11, 12, 13, 30, reading and/or writing a parameter for configuring and/or monitoring the other one of the devices 11, 12, 13, 30, and
- for the parameter, creating an attribute comprising an extended markup language scheme for defining the parameter.

By creating an attribute comprising an extended markup language scheme for defining the parameter, an arbitrary parameter can be introduced, and said one of the devices 11, 12, 13, 30 can read and/or write even a completely new parameter for configuring and/or monitoring the other one of the devices 11, 12, 13, 30. Such a method is more flexible and offers more possibilities.

Preferably, said one of the devices 30 is linked to a northbound interface 33 and a southbound interface 31, 32, the creating step being performed via the southbound interface 31, 32. Said one of the devices 30 is linked via the northbound interface 33 to for example a service provider 40 or a service configuration manager 40 and via the southbound interface 31, 32 to for example the customer device 11, 12, 13.

Preferably, the extended markup language scheme defines a type of the parameter and/or a description of the type of the parameter and/or a description of the parameter and/or metadata of the parameter. This embodiment discloses several ways of how to define the parameter.

Preferably, the parameter is a non-standardized parameter comprising a name and a value. Especially non-standardized parameters could not be used in a prior art situation and can now be used advantageously in a situation according to the invention.

An example of an XML scheme is as follows:

```
 <?xml version="1.0" encoding="ISO-8859-1" ?>
 <xs:schema xmlns:xs="h t t p ://www.w3.org/2001/XMLSchema">
 <xs:element name="defenition">
 <xs:complexType>
  <xs:sequence>
    <xs:element name="parameter-name" type="xsatring"/>
    <xs:element name="description" type="xs : string"/>
    <xs: element name="type" type="parameter-definition-type"/>
  </xs: sequence>
 </xs:complexType>
 <xs:attribute name"isArray" type="xs:boolean"/>
 </xs:element>
 
 <xs:element name="parameter-definition-type">
 <xs:complexType>
  <xs:sequence>
    <xs:element name="sub-type" type="defenition"/>
    <xs:element name="type" type="parameter-base-type"/>
    <xs:etement name="enum-type" type="parameter-enum-type"/>
  </xs:sequence>
 </xs:complexType>
 </xs:element>
 
 <xs:element name="parameter-enum-type">
 <xs:complexType>
  <xs:sequence>
    <xs:element name="value" type="parameter-base-type"/>
```

```
 </xs:sequence>
 </xs:complexType>
 <xs:attribute name="name" type="xs:string"/>
 </xs:element>
 
 <xs:simpleType name="parameter-base-type">
 <xs:element name="Integer" type="xs:string"/>
 <xs:element name="Long" type="xs:string"/>
 <xs:element name="String" type="xs:string"/>
 </xs:simpleType>
 </xs:schema>
```

An example on how the XML scheme will be used is as follows:

```
 <?xml version="1.0"?>
 <note
 xmlns="h t t p ://www.alcatel.be"
 xmlns:xsi="h t t p ://www.w3.org/2001/XMLSchema-instance"
 xsi:schemaLocation="h t t p ://www.alcatel.automatic.parainetercreation.xsd">
 <definition>
 <parameter-name>device.service.log.ioglevel</parameter-name>
 <description>Gives the log level of the logging application.</description>
 <type>
 <enum-type>log-level</enum-type>
 </type>
 </definition>
 
 <parameter-enum-type name="log-level">
 <value>debug</value>
 <value>info</value>
 <value>error</value>
 </parameter-enum-type>
```

The invention also relates to an apparatus 11, 12, 13, 30 for managing a communication between a server device 30 and a customer device 11, 12, 13, which apparatus 11, 12, 13, 30 is one of the devices 11, 12, 13, 30 and comprises
- means 70, 80, 90 for reading and/or writing a parameter for configuring and/or monitoring the other one of the devices 11, 12, 13, 30, and
- means 70, 80, 90 for, for the parameter, reading and/or writing an attribute comprising an extended markup language scheme for defining the parameter.

Preferably, said apparatus 30 is linked to a northbound interface 33 and a southbound interface 31, 32, the attribute reading and/or writing means 90 being linked to the southbound interface 31, 32.

Preferably, the extended markup language scheme defines a type of the parameter and/or a description of the type of the parameter and/or a description of the parameter and/or metadata of the parameter.

Preferably, the parameter is a non-standardized parameter comprising a name and a value.

Preferably, the server device 30 is an auto configuration server and the customer device 11, 12, 13 is a customer premises equipment and the managing of the communication is in accordance with a TR069 protocol.

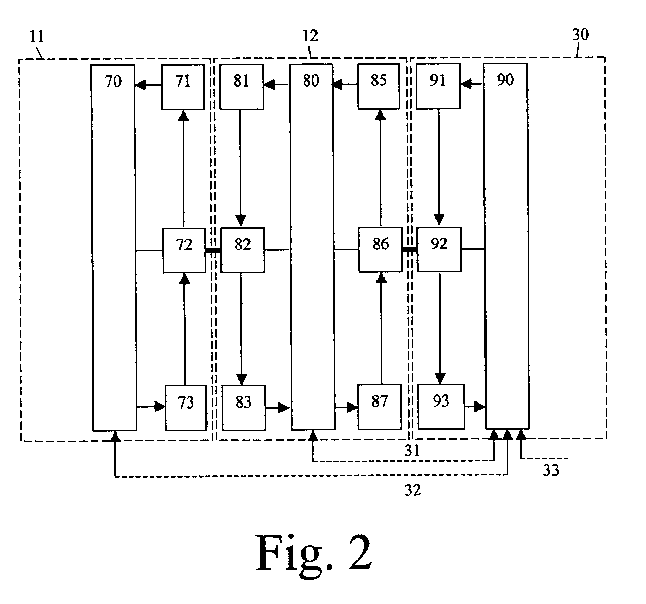

Thereto, as shown in the Fig. 2, the service termination 11 comprises a processor / memory 70 coupled to a receiver 71, an interface 72 and a transmitter 73. The interface 72 is coupled to the receiver 71 and to the transmitter 73 and via the local network 14 not shown here to a first interface 82 of the gateway 12. This gateway 12 comprises a processor / memory 80 coupled to a receiver 83, the first interface 82 and a transmitter 81. The first interface 82 is coupled to the receiver 83 and to the transmitter 81. The processor / memory 80 is further coupled to a receiver 85, a second interface 86 and a transmitter 87. The second interface 86 is coupled to the receiver 85 and to the transmitter 87 and via the transport network 20 not shown here to an interface 92 of the server device 30. This server device 30 comprises a processor / memory 90 coupled to a receiver 93, the interface 92 and a transmitter 91. The interface 92 is coupled to the receiver 93 and to the transmitter 91.

The processor / memory 90 is linked via a southbound interface 31 to the processor / memory 80 and via a southbound interface 32 to the processor / memory 70. Each processor / memory 70, 80, 90 may be means for reading and/or writing a parameter for configuring and/or monitoring the other one of the devices, and may be means for, for the parameter, reading and/or writing an attribute comprising an extended markup language scheme for defining the parameter.

So, instead of having a new object model dump via the northbound interface 33 by a service provider, which works for a single service provider management of the home network, but not for a multi service provider management model, the new object model is automatically discovered via the southbound interface 31, 32 (and does no longer require an action from the service provider). The correct object model is then created. This concept allows the home network to be managed by different service providers. Detection and creation of a new object via the southbound interface 31, 32 is further important for LAN services management. It also makes a business model of multi ACS management possible.

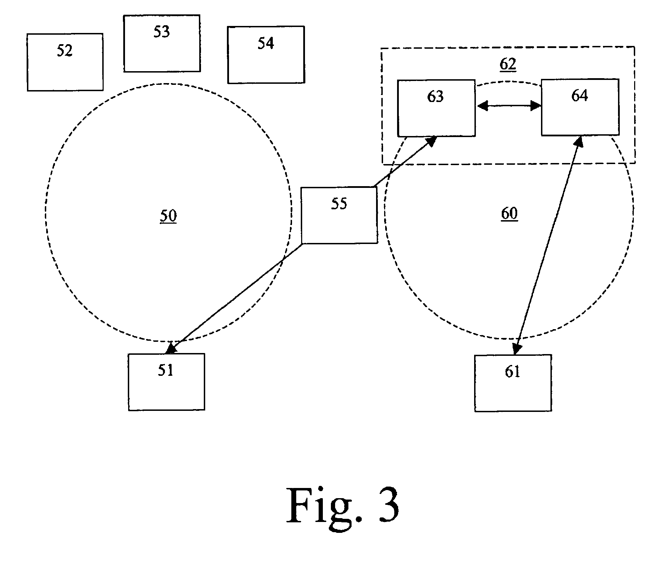

The system shown in the Fig. 3 comprises a home network 50 and an internet network 60 coupled to each other via an interface 55. Home devices 51-54 are coupled to and/or form part of the home network 50. A service provider 62 comprises a home service management platform 63 and a web server 64 and is coupled to and/or forms part of the internet network 60. The web server is coupled to a user device 61.

According to another aspect of the invention, a method comprises the step of
- exporting a graphical user interface and/or a web interface over a remote management protocol from a home device 51-54 to a home service management platform 63 or a further device (customer premises equipment). This embodiment may be dependent on or independent from the reading and/or writing step and the creating step.

Preferably, the method further comprises the step of
- including metadata for a further parameter to an object model that lists parameters for configuring the home device 51-54, which metadata defines a meaning and/or a way it is to be depicted in the graphical user interface and/or the web interface.

According to this other aspect of the invention, an apparatus further comprises
- means for exporting a graphical user interface and/or a web interface over a remote management protocol from a home device 51-54 to a home service management platform 63 or a further device (customer premises equipment). This embodiment may be dependent on or independent from the means 70, 80, 90 for reading and/or writing the parameter and the means 70, 80. 90 for reading and/or writing the attribute. The means for exporting may for example correspond with the transmitter 73, 81, 87, 91 or with a transmitter not shown.

Preferably, the apparatus further comprises
- means for including metadata for a further parameter to an object model that lists parameters for configuring the home device 51-54, which metadata defines a meaning and/or a way it is to be depicted in the graphical user interface and/or the web interface. The means for including the metadata may for example correspond with the processor / memory 70, 80, 90 or with a processor / memory not shown.

About this other aspect, the following is observed. In recent years, the home network evolved from a single personal computer connected to the Internet to a full-fledged local area network, interconnecting numerous different devices. With the increasing popularity of the Internet, the number of home devices that are able to communicate using the IP protocol increased dramatically. In the early days, only personal computer devices such as desktop computers, laptops and palmtops were able to access the Internet over the IP protocol. Nowadays, other electronic devices such as hard-disk recorders, camcorders, TV set-top-boxes, etc. are able to access an IP network, allowing the consumer to configure them by means of for example a web interface. Furthermore, other devices in the home such as white goods and domotica applications are making the leap towards the IP network as well.

Because managing this plethora of devices over the home network becomes a challenging task, many efforts are being undertaken to find a common solution. Driven by the requirements of the service providers (e.g., DSLforum, OMA, etc.), the remote management of the home network has become a hot topic. This way, the service provider is able to remotely configure certain devices in the home in order to increase the quality of its offered service and relieve the customer of some difficult and repetitive management tasks.

One of the services that may be offered by the service provider is the remote configuration of the home network by the customer. The service provider offers a centralized platform through which the customer can access the home devices. For example, when the customer is abroad, he/she may use a web browser to access the web server of the service provider in order to get an overview of all managed devices in his/her home network. Throughout this web interface, certain configuration tasks can be performed. For example, the customer may decide the home alarm should be switched on, so he/she will access the appropriate device using the web browser so detailed information on the alarm settings is presented. One of the remaining problems is the visualization of these configuration settings. Because every device requires different settings and is configured in a specific way, a single generic graphical management interface will not suffice.

There mainly exist two different approaches to remotely configure devices in the home network. Unfortunately, they both have drawbacks that make them unsuitable to offer a user-friendly service.
I) Without a home service management platform (HSM): In this case, each home device is accessed directly without the use of a centralized platform. For example, the customer may browse to the web interface of the device that needs to be configured. Therefore, he/she needs to know the IP address of every possible device in the home network. Furthermore, the home firewall / NA(P)T needs to be configured correctly in advance in order to forward the request to the right device. Off coarse, the device needs to run a web server in order to allow remote configuration. Besides these drawbacks, security issues may arise when each individual device should be able to access the Internet independently and in an uncoordinated way.
II) With a home service management platform (HSM): Using a HSM, a service provider offers a remote management service to the home network. To do so, remote management protocols such as TR-069 or OMA-DM may be used. When abroad, the customer goes to the centralized HSM in order to access the home network and get an overview of all home devices or services. Once the appropriate device or service is selected, the customer can configure it. Even though this approach has some major advantages (e.g., centralized access to the home, overview of all managed devices, security can be provided by the service provider etc.), the remote management protocols do not provide enough information to offer a user-friendly device configuration. The TR-069 protocol for example configures devices by means of getting and setting certain parameters of the device. Parameters are defined as name-value pairs, which do not provide any information on the meaning of the parameter. The HSM does not know what the parameters means and the user can only guess the impact of changing the parameter on the device configuration. Currently, the only solution to provide remote management of home devices throughout a HSM, is by presenting the customer a text-based list of parameters that can be changed. A graphical Web interface is only possible if the HSM is configured with the layout of the Web page (and the mapping to the parameters) for every possible type and brand of all existing devices.

The idea to solve the previous problems is to export the graphical user or web interface over the remote management protocol (e.g., TR-069 or OMA-DM) from the home device to HSM. This means that the remote management protocol will be extended with information describing the graphical interface needed to configure devices. For example, the TR-069 protocol requires an object model (parameter tree) for every device. This object model lists all parameters (read/write) to configure the device. The idea is to include metadata for each parameter that describes its meaning and the way it should be depicted in a graphical user interface (GUI). The metadata for the object model can for example be defined by means of an XML schema, as follows:

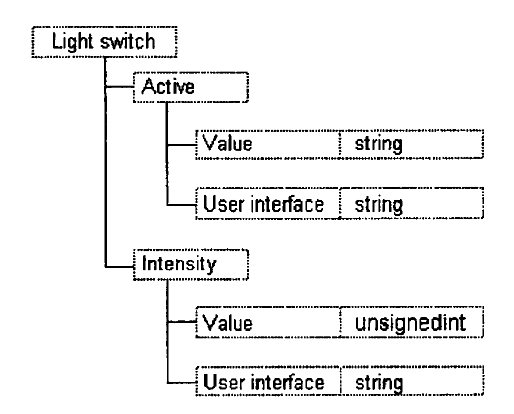

As an example the object model for a simple light switch (dimmer) that regulates the intensity of a spotlight is shown. The object model may contain a parameter indicating the switch is turned on or off, and a parameter indicating the intensity of the light. The XML schema to provide hints for creating a graphical user interface may define that the first parameters needs to depicted as an on/off switch, while the second parameter needs to be depicted as a rotational wheel with values ranging from 0 to 10 in steps of 1.

Using the graphical user interface extension of the remote management protocol, the HSM may communicate this graphical user interface information through its northbound interface to a web server, which hosts the web page for the device that needs to be configured. Based on the received graphical user interface information from the HSM, the web server creates the web page and provides it to the customer. The layout of this page can be based on a proprietary template, which is defined by the service provider.

In the Fig. 3 a remote configuration of a device using the graphical user interface extension of TR-069 is shown. The customer goes to work and wants to remotely configure his hard-disk recorder to store a certain TV show. He/she browses to the home network service provider web page and logs-in to his/her account. If successful, he/she receives an overview of all the home devices that are managed by the home network service provider. The customer selects the hard-disk recorder in order to configure it. Next, the service provider contacts the HSM, which in turn contacts the hard-disk recorder in the home using the TR-069 protocol (e.g., retrieve object model and get parameter values). As part of the object model, the hard-disk recorder sends the graphical user interface information to create a Web Interface to the HSM, which delivers it to the home network service provider web server. This web server uses this information in combination with his own web style in order to create a web page, which can be used to configure the hard-disk recorder. Once the customer has submitted the requested configuration actions, the web server forwards the configurations to the HSM, which in turn uses the TR-069 protocol to set the parameter values to configure the hard-disk recorder. The main advantages of this solution are:
- no need for a web server on every home device (less logic/processing power needed in devices),
- uniform look-and-feel for every home device,
- possible standardized web access to every home device,
- centralized web site to manage and configure all home devices,
- only one configuration protocol needed (e.g., TR-069, OMA DM) to configure the devices in the home network (e.g., no need to adjust the home firewall / NAT to pass HTTP requests to the correct device),
- HSM can manage secure access to all home devices, and
- possible to provide a web interface for devices that do not provide one themselves, e.g., white goods.

In Fig. 1-3, each coupling / connection may be a wired coupling / connection or a wireless coupling / connection and may comprise sub-couplings / sub-connections and/or units not shown. Any unit shown may be divided into sub-units, and any two or more units may be integrated into a new and larger unit. Any unit shown may comprise hardware and/or software. The computer program product according to the invention may be stored on a fixed medium or a removable medium.

The expression "for" in for example "for managing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude a possible presence of one or more pluralities.

The steps and/or functions of reading and/or writing etc. do not exclude further steps and/or functions, like for example, inter alia, the steps and/or functions described for the Figures etc.

## Claims

1. A method for managing a communication between a server device (30) and a customer device (11,12,13), which method comprises the step of
- at one of the devices (11,12,13,30), reading and/or writing a parameter for configuring and/or monitoring the other one of the devices (11,12,13,30),
**characterized in that** the method comprises the step of
- for the parameter, creating an attribute comprising an extended markup language scheme for defining the parameter.

2. The method as defined in claim 1, **characterized in that** said one of the devices (30) is linked to a northbound interface (33) and a southbound interface (31,32), the creating step being performed via the southbound interface (31,32).

3. The method as defined in claim 1 or 2, **characterized in that** the extended markup language scheme defines a type of the parameter and/or a description of the type of the parameter and/or a description of the parameter and/or metadata of the parameter.

4. The method as defined in claim 1, 2 or 3, **characterized in that** the parameter is a non-standardized parameter comprising a name and a value.

5. The method as defined in claim 1, 2, 3 or 4, **characterized in that** the server device (30) is an auto configuration server and the customer device (11,12,13) is a customer premises equipment and the method is a TR069 protocol.

6. The method as defined in claim 1, 2, 3, 4 or 5, **characterized in that** the method further comprises the step of
- exporting a graphical user interface and/or a web interface over a remote management protocol from a home device (51,52,53,54) to a home service management platform (63) or a further device.

7. The method as defined in claim 6, **characterized in that** the method further comprises the step of
- including metadata for a further parameter to an object model that lists parameters for configuring the home device (51,52,53,54), which metadata defines a meaning and/or a way it is to be depicted in the graphical user interface and/or the web interface.

8. A computer program product for performing the steps of the method as defined in any one of the claims 1-7.

9. A medium for storing and comprising the computer program product as defined in the claim 8.

10. An apparatus (11,12,13,30) for managing a communication between a server device (30) and a customer device (11,12,13), which apparatus (11,12,13,30) is one of the devices (11,12,13,30) and comprises
- means (70,80,90) for reading and/or writing a parameter for configuring and/or monitoring the other one of the devices (11,12,13,30),
**characterized in that** the apparatus (11,12,13,30) comprises
- means (70,80,90) for, for the parameter, reading and/or writing an attribute comprising an extended markup language scheme for defining the parameter.

11. The apparatus (11,12,13,30) as defined in claim 10, **characterized in that** said apparatus (30) is linked to a northbound interface (33) and a southbound interface (31,32), the attribute reading and/or writing means (90) being linked to the southbound interface (31,32).

12. The apparatus (11,12,13,30) as defined in claim 10 or 11, **characterized in that** the extended markup language scheme defines a type of the parameter and/or a description of the type of the parameter and/or a description of the parameter and/or metadata of the parameter.

13. The apparatus (11,12,13,30) as defined in claim 10, 11 or 12, **characterized in that** the parameter is a non-standardized parameter comprising a name and a value.

14. The apparatus (11,12,13,30) as defined in claim 10, 11, 12 or 13, **characterized in that** the server device (30) is an auto configuration server and the customer device (11,12,13) is a customer premises equipment and the managing of the communication is in accordance with a TR069 protocol.
